(19) Europäisches Patentamt
European Patent Office
Office européen des brevets

(11) **EP 3 316 120 A1**

(12) **EUROPEAN PATENT APPLICATION**

(43) Date of publication:
**02.05.2018 Bulletin 2018/18**

(51) Int Cl.:
*G06F 3/147* (2006.01)  *G09G 5/02* (2006.01)
*H04N 9/64* (2006.01)

(21) Application number: **16002287.7**

(22) Date of filing: **26.10.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **e.solutions GmbH**
**85055 Ingolstadt (DE)**

(72) Inventors:
• **Christmann, Stefan**
  **73312 Geislingen/Steige (DE)**

• **Franke, Thomas**
  **88471 Laupheim (DE)**

(74) Representative: **Röthinger, Rainer**
**Wuesthoff & Wuesthoff**
**Patentanwälte PartG mbB**
**Schweigerstrasse 2**
**81541 München (DE)**

Remarks:
Amended claims in accordance with Rule 137(2) EPC.

(54) **COLOR ADJUSTMENT TECHNIQUE FOR A DISPLAY UNIT**

(57)     A system for color adjustment is described. The system comprises a controller configured to receive input digital color values and a detecting unit configured to determine at least one of a viewing angle and the position of a head of a user with respect to a display unit. The controller is configured to convert the input digital color values to converted digital color values based on at least one of the determined viewing angle and the determined position of the head of the user, and to output the converted digital color values to the display unit.

Fig. 1

**Description**

**Technical field**

The present disclosure generally relates to color adjustment. In particular, the present disclosure relates to color adjustment dependent on at least one of a viewing angle and a position of a head of a user with respect to a display unit. The technique may be embodied in one or more of methods, computer program products, data structures and systems.

**Background**

The importance and use of display units (e.g., liquid crystal display (LCD) devices) is still increasing today. The actual trend of companies producing display units aims for an improvement of display characteristics such as resolution, quantity of displayable colors, contrast, bigger screen sizes, etc. These characteristics have in common that they often presuppose that a user of a display unit is centrally located in front of the display unit in order to fully benefit from the improved characteristics.

In order to provide an image via a display unit to a user, the display unit receives input digital color values which are each mapped to a desired physical color value based on a color profile stored in the display unit or a controller controlling the display unit. The color profile is generally preset by the display manufacturer and includes a mapping of input digital color values to associated physical color values.

Usually, the best image quality can be obtained when the user is situated in front of the display unit such that a viewing direction is perpendicular to a central region of the display unit. Moreover, since display unit elements, e.g. pixels, emit light in a light cone having a certain opening angle, the user can still obtain a good image quality in viewing directions slightly different from the viewing direction perpendicular to the central region of the display unit.

This effect works fine for, e.g., mobile phones, which have a relatively small display unit. But when it comes to, e.g., televisions or display units with diameters of 40 inches or more, the viewing angle and the position of the user's head relative to the display unit influence the perceived image quality. A commonly known solution to decrease this effect is the wide screen technology, wherein the opening angle of the light cone of the display unit elements is increased. However, the increase of the opening angle of the light cone is limited. Also, due to the spread of light energy across a larger angle, the overall luminance for one single angle of observation is reduced. Thus the user may be provided in certain viewing positions with an image quality that is not satisfying.

Due to the luminance and chromaticity sensitivity of the human eye, light from different viewing angles may be detected with different chromaticities and luminances for identical mappings of digital color value inputs and associated physical color values displayed by the display unit. Thus, this effect may even deteriorate the limitations of the wide screen technology.

Document DE 10 2012 200 525 A1 discloses an approach for compensating a viewing angle-dependent luminance shift. The approach comprises adjusting a first luminance value of a first pixel to a first luminance value corresponding to a viewing angle of, e.g., 0° and a second luminance value of a second pixel adjacent to the first pixel to a second luminance value corresponding to a viewing angle of, e.g., 30°, such that the user does not perceive a luminance difference when changing a viewing angle from 0° to 30°, or vice versa.

**Summary**

In view of the above, there is a need for a technique for color adjustment of a display unit, wherein the technique avoids one or more of the drawbacks discussed above or other, related problems.

According to a first aspect, a system for color adjustment is presented. The system comprises a detecting unit configured to determine at least one of a viewing angle and a position of a head of a user with respect to a display unit. The system further comprises a controller configured to receive input digital color values, to convert the input digital color values to converted digital color values based on at least one of the determined viewing angle and the determined position of the head of the user and to output the converted digital color values to the display unit.

The plurality of received input digital color values may pertain to different sections of the display unit and may be intended to be displayed substantially at the same time (e.g., to belong to a single image). In such a case, the multiple input digital color values may all be the same (e.g., in the case of a monochromatic image) or may generally be different from each other (e.g., in the case of a typical graphical user interface).

The display unit may comprise at least one of a liquid crystal display, LCD, unit, an organic light emitting diode, OLED, display unit, a cathode ray tube, CRT, display unit, a plasma display unit or the like. The input digital color values may be, e.g., a red-green-blue, RGB, digital color value input, a hue-saturation-value, HSV, digital color value input, a hue-saturation-lightness (luminance), HSL, digital color value input, or a luminance-chromaticity, LUV, digital color value input. The digital color value input may lead to displaying physical color values on the respective display device, wherein the physical color values correspond to a color space, e.g., the CIE 1931 color space (CIE-xyY or CIE-Yxy).

The position of the head of the user with respect to the display unit may be determined as a distance from the head of the user to the display unit and/or in a two-dimensional or three-dimensional coordinate system, e.g., in a xy-plane or a xyz-space (e.g., as a vector, in particular a normal vector relative to a specific display unit section). Furthermore, the determined viewing angle may comprise at least one of an angle in the two-dimensional plane or the three-dimensional space. Optionally, the information about the determined viewing angle and the position of the head of the user may be combined and jointly evaluated by the controller.

The viewing angle and/or the position of the head of the user with respect to the display unit may be determined by determining a viewing angle from the head of the user to the center of the display unit, or to any position of a display surface of the display unit. Optionally, the viewing angle and/or the position of the head of the user may be determined for the entire display section of the display unit, and/or smaller sections, e.g., subdivided display sections, pixels, and/or subpixels of the display unit. The viewing angle and/or the position of the head of the user for the entire display section of the display unit, and/or smaller sections may be determined by determining viewing angles and/or positions of the head of the user with respect to each pixel of the display section, smaller section, or edges of the display section or smaller sections and determining an average viewing angle and/or position of the head of the user, e.g. an arithmetic average, in each axis, e.g. x-/y-/z-axis.

The controller may be configured to convert the input digital color values by adjusting at least one of luminance values and chromaticity values of the input digital color values. The luminance values of the input digital color values can, e.g., be increased by adding the equal amount of luminance to each luminance value of the input digital color values or decreased by subtracting the equal amount of luminance from each luminance value of the input digital color values. Thus, the differences of each of the converted digital color values and the respective input digital color values in view of the luminance values are identical. Additionally, or as an alternative, the chromaticity values of the input digital color values can, e.g., be increased by adding the equal amount of chromaticity to each chromaticity value of the input digital color values or decreased by subtracting the equal amount of chromaticity from each chromaticity value of the input digital color values.

The controller may be configured to convert the input digital color values by adjusting at least one of chromaticity values and luminance values of a first input digital color value associated with a first position on the display unit and of a second input digital color value associated with a second position on the display unit. The first position is closer to the determined position of the head of the user than the second position. At least one of a chromaticity value and a luminance value of the second input digital color value may be adjusted by a different value than at least one of a chromaticity value and a luminance value (e.g. a larger or smaller) of the first input digital color value.

The controller may be configured to convert the first and second input digital color values such that at least one of a chromaticity and a luminance perceived by the user of physical color values associated with the converted digital color values displayed by the display unit is substantially the same for the first and the second position on the display unit, when the first and second input digital color values have an identical luminance and/or an identical chromaticity value.

The controller may be configured to convert the input digital color values such that at least one of a chromaticity and a luminance perceived of physical color values associated with the conversed digital color values displayed by the display unit is substantially homogenous over the entire display unit, when the input digital color values associated with all positions on the display unit are identical. Identical input digital color values mean, for example for RGB digital color value inputs, that all input digital color values have the same values in each of a red, a green and a blue value.

The detecting unit may be configured to evaluate at least one of a viewing angle and a position of the head of the user with respect to each of a plurality of display units to determine the particular display unit currently viewed by the use. The controller may be configured to convert the input digital color values based on at least one of the viewing angle and position of the head of the user relative to the particular display unit, and to output the converted digital color values to the particular display unit.

The controller may be configured to determine whether a display unit of the plurality of the display units is currently switched on, and to output the converted digital color values to only these display units, which are switched on. As an option, when it is determined that a display unit of the plurality of the display units is switched off, the controller may not convert the input digital color values for the particular switched off display unit.

At least one of the viewing angle and the head of the user may be determined by face recognition. The detecting unit may be configured to determine the user out of a plurality of persons situated near the display unit by determining a distance to each head of the plurality of persons and determine the head of the person having the smallest distance to the display unit as the user. As an example, the distance to a central region of the display unit or to the region of the display unit closes to the user may be determined. In addition or alternatively, the detecting unit may be configured to determine whether a person of the plurality of persons is currently viewing the display unit, and to combine the determined distance of each head with the information of whether the person is currently viewing the display unit in order to determine the user. For example, when a first person having the closest distance to the display unit is not viewing the display unit and a second person having a distance, which is greater than the closest distance, is currently viewing the display unit, the controller may be configured to the determine the second person as the user based on the determined distances and viewing directions of the first and second persons.

The controller may further be configured to convert the input digital color values by adjusting at least one of a luminance value, a hue value and/or a chromaticity value of the input digital color values. Of course, one or more other values may be adjusted as well.

The controller may be configured to convert the input digital color values to the converted digital color values by accessing color profile data, wherein the color profile data is indicative of a mapping of at least one input digital color value to two or more viewing angle dependent physical color values associated with the at least one input digital color value. The color profile data may be prestored on a storage unit.

The controller may be configured to convert the input digital color values to the converted digital color values by accessing conversion information, wherein the conversion information is indicative of a conversion of input digital color values to the converted digital color values based on at least one of a viewing angle and a position of the head of the user with respect to the display unit displaying the converted digital color values.

The system may be configured to be used in a motor vehicle. In such a case, the detecting unit may be configured to determine a driver of the motor vehicle as the user.

When there are more persons situated in the motor vehicle, the detecting unit may be configured to determine a passenger of the motor vehicle, and to determine at least one of a viewing angle and a position of the head of the driver and at least one of a viewing angle and a position of the head of the passenger with respect to the display unit. The detecting unit may be configured to detect whether the driver is currently viewing the display unit and the controller may be configured to determine the driver as the user when the driver is currently viewing the display unit and to determine the passenger as the user when the driver is currently not viewing the display unit. The passenger determined as the user may be situated next to the driver on one of the front seats of the motor vehicle, but may also be situated on one of the backseats of the motor vehicle.

The controller can be configured to determine whether the user is currently viewing a specific window displayed on the display unit (e.g., on a specific display unit section), and to convert the input digital color values based on at least one of a determined viewing angle and determined position of the head of the user with respect to the specific window displayed on the display unit. Additionally or alternatively, the detecting unit can be configured to determine that at least two persons are situated in front of the display unit, wherein the detecting unit is configured to determine one person of the at least two persons as a first user and the second person of the at least two persons as a second user. The detecting unit can further be configured to determine that the first user is viewing a first window displayed on the display unit and the second user is viewing a second window display on the display unit, wherein the controller is configured to convert input digital color values associated with the first window to converted digital color values based on at least one of a determined viewing angle and position of the first user and to convert input digital color values associated with the second window to converted digital color values based on at least one of a determined viewing angle and position of the head of the second user.

According to a second aspect, a motor vehicle comprising the system according to the first aspect and/or embodiments of the first aspect is presented.

According to a third aspect, a method for color adjustment of a display unit is presented. The method comprises receiving input digital color values, determining at least one of a viewing angle and a position of a head of a user with respect to a display unit, converting the input digital color values to convert the digital color values based on at least one of the determined viewing angle and the determined position of the head of the user with respect to the display unit, and outputting the converted digital color values to the display unit.

According to a fourth aspect, a method for determining color profile data is presented. The method comprises displaying at least one input digital color value via a display unit, detecting a respective physical color value associated with the at least one input digital color value for each of a plurality of viewing angles, and determining, based on the detected physical color values, color profile data indicative of a mapping of at least one input digital color value to viewing angle dependent physical color values associated with the at least one input digital color value.

The method may further comprise the step of determining conversion information based on the viewing angle dependent physical color values associated with the at least one input digital color value, wherein the conversion information is indicative of a mapping of input digital color values to converted digital color values based on a viewing angle.

The meaning of the expression "mapping" according to this disclosure may in some variants be understood such that each of a plurality of input digital color values and each of a plurality of viewing angles or positions of the head of the user are unambiguously associated with a respective output physical color value (or a respective converted digital color value which in turn is associated with a respective output physical color value of the respective display device). The color profile data may comprise at least one of a conversion matrix, a file, a lookup table (LUT), and an ICC profile.

The full input color space may, for example, be represented by the full RGB color space including values for R, G, and B, each in an interval of [0, 1] ([0%, 100%]) or each in an interval of [0, 255] (for 24-bit color representation). In addition or alternatively, the full input color space may, for example, be represented by the full LUV color space including L, U and V, wherein L is a hue value and U and V are chromaticity values. In addition or alternatively, the full input color space may, for example, be represented by the full HSL color space or HSV color space. It is known to the skilled person that color values can be unambiguously transformed between RGB, LUV, HSV and HSL representations.

The conversion information may be determined in the form of a conversion matrix, wherein the input digital color values are converted based on at least one of the determined viewing angle and position of the head of the user to the converted digital color values such that at least one of a luminance value and a chromaticity value are adjusted to a respective converted luminance value and a respective converted chromaticity value.

According to a fourth aspect, a computer program product comprising a computer program code configured to perform any of the methods and method steps presented herein when executed on one or more processors is provided. As an option, the computer program product may be stored on a computer-readable medium.

According to a fifth aspect, a data structure representing conversion information is presented. The data structure is configured to be accessed by a color management device configured to receive input digital color values and to output converted digital color values to a display unit. The conversion information is indicative of a conversion of the input digital color values to the converted digital color values based on at least one of a viewing angle and a position of a head of a user with respect to the display unit displaying the converted digital color values.

The details described above with regard to the first aspect may also apply to the second, third, fourth and fifth aspects.

## Brief description of the drawings

The embodiments presented herein are described below with reference to the accompanying drawings, in which:

Fig. 1 shows a schematic representation of a color adjustment scenario, wherein a display unit is visible to a user;

Fig. 2 shows a flow diagram of a color adjustment method for a display unit according to the present disclosure;

Fig. 3 shows a schematic representation of a display unit with respect to a position of the user in detail;

Fig. 4 shows a schematic representation of a color adjustment scenario, wherein a plurality of display units is visible to a user;

Fig. 5 shows a schematic representation of a situation with regard to color adjustment in a motor vehicle;

Fig. 6 shows a flow diagram of a method for determining color profile data;

Fig. 7 shows a schematic representation of an arrangement for determining color profile data.

## Detailed description

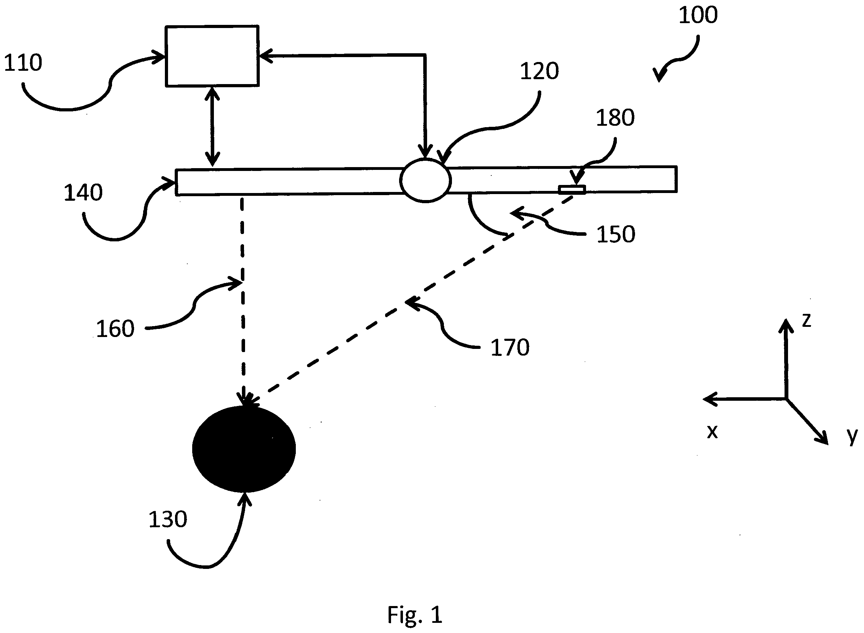

Fig. 1 shows an embodiment of a color adjustment scenario in which a display unit 140 is visible to a user 130. The user 130 is situated in front of the display unit 140. The display unit 140 is connected to a controller 110. The controller 110 receives input digital color values (e.g., corresponding to video data or image data) and outputs converted digital color values to the display unit 140.

Additionally, a detecting unit 120 is provided (e.g., on top of the display unit 140) and is connected to the controller 110. The detecting unit 120 is configured to determine at least one of a viewing angle 150 and a position of the head of the user 130 with respect to the display unit 140. In order to determine at least one of the viewing angle 150 and the position of the head of the user 130, the detecting unit 120 determines via geometrical calculations the viewing angle 150 by, e.g., determining a light emitting direction 170 (or viewing direction) from a display section 180 to the head of the user 130 and determining the viewing angle 150 in the xz-plane between the light emitting direction 170 and a display surface of the display unit 140. Additionally, or in the alternative, the detecting unit 120 determines the position of the head of the user 130 relative to the display unit 140 (e.g., in the form of the normal vector 160 from the head of the user 130 to the display surface of the display unit 140). This relative position of the head of the user 130 to the display surface also defines a plurality of viewing directions 170 based on the assumption that the head of the user 130 will remain stationary while the user 130 is turning his head (and scanning the display unit 140 at various viewing directions 170).

The detecting unit 120 can comprise a Time-of-Flight, TOF, camera, a charge-coupled-device, CCD, camera, an infrared camera or any other camera suitable to detect at least one of the viewing angle 150 and or position of the head of the user 130. The detecting unit 120 can be configured to determine at least one of the viewing angle 150 and position of the head of the user 130 via any one of optical signals and acoustic signals, wherein the optical signals can be at least one of a white light, an infrared light and laser light. The acoustic signals can be acoustic signals inaudible to human beings, such as ultrasound signals.

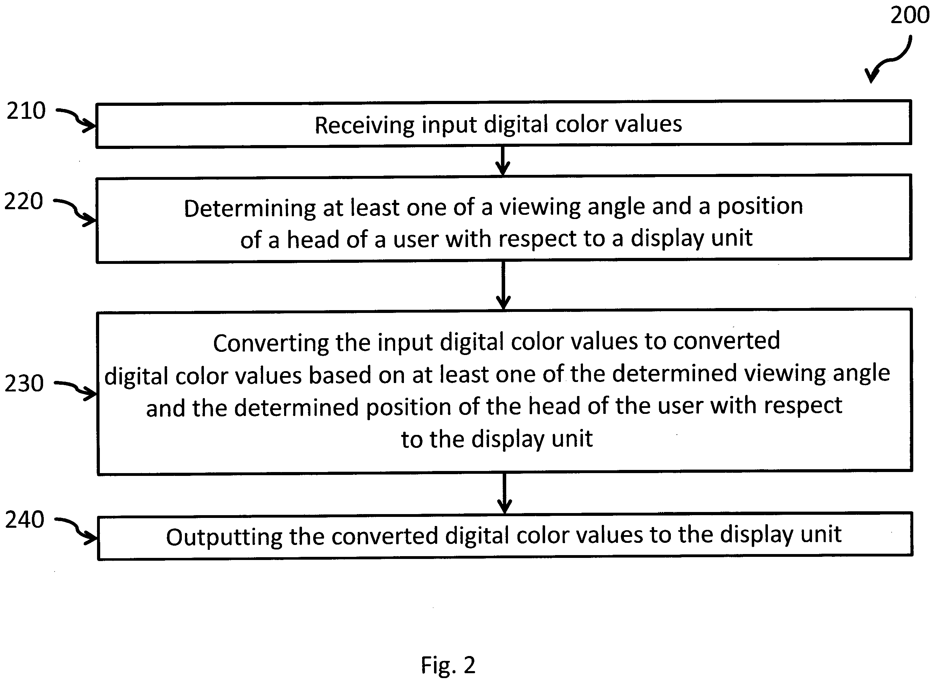

For simplification, in Fig. 1, the viewing angle 150 and the position of the head of the user 130 are only illustrated in two dimensions. However, it is clear that the detecting unit 120 may also be configured to determine at least one of the viewing angle 150 and the position of the head of the user 130 in three dimensions (see Fig. 2). Thus, as illustrated in Fig. 1, the detecting unit 120 determines the viewing angle 150 in an xz-plane. Moreover, in the accompanying drawings, the viewing direction 170 as well as the normal vector 160 are determined with respect to one point of the head of the user 130. The detecting unit 120 can also be configured to determine the viewing direction 170 and/or the normal vector 160 with respect to an eye of the user 130, the center of the face of the user 130, e.g., his/her nose, or the like. To this end, face recognition techniques may be applied by the detecting unit 120.

The detecting unit 120 outputs at least one of the viewing angle 150 and the position of the head of the user 130 to the controller 110 via an air interface, a cable interface, a network or the like. The controller 110 receives input digital color values (e.g., in the form of video data or image data) via an air interface, a cable interface, a network or the like. Moreover, the user may instruct the controller 110 to access digital color values stored on a storage unit (not shown) and use the stored digital color values (e.g., in the form of video data or image data) as the input digital color values.

Based on the received information from the detecting unit 120, the controller 110 converts the input digital color values to converted digital color values based on at least one of the determined viewing angle 150 and the determined position of the head of the user 130 and outputs the converted digital color values to the display unit 140. Accordingly, the controller 110 may be regarded as an interface between a source of digital color value inputs and the display unit 140.

The detecting unit 120 can be configured to determine the position of the display unit 140 with respect to the detecting unit 120 and/or to determine the position of the display of the display unit 140. Information about the absolute position of the display unit 140 and/or a size and/or the position of the display of the display unit 140 with respect to the detecting unit 120 can be prestored in a storage unit of the detecting unit 120. Alternatively, the information is stored in a storage unit of the controller 110, wherein the controller 110 outputs the information to the detecting unit 120, or the detecting unit 120 is configured to access the storage unit of the controller 110 for this information. Moreover, the detecting unit 120 can be configured to determine at least one of the viewing angle 150 and position of the head of the user 130 continuously or in predetermined time intervals.

The controller 110 can comprise a processing unit, e.g. a microprocessor, which is configured to receive information relating to at least one of the determined viewing angle 150 and position of the head of the user 130 from the detecting unit 120, to process the information to convert the input digital color values based on at least one of the determined viewing angle 150 and the determined position of the head of the user 130, and to output the converted digital color values to the display unit 120.

Fig. 2 illustrates in a flow diagram an embodiment of a method 200 for color adjustment. In a first step 210, input digital color values are received by the controller 110. Next, in step 220, at least one of a viewing angle 150 and a position of a head of the user 130 are determined with respect to the display unit 140 by the detecting unit 120. Based on at least one of the determined viewing angle 150 and the determined position of the head of the user 130, in step 230, the input digital color values are converted to converted digital color values by the controller 110. Finally, in step 240, the converted digital color values are outputted to the display unit 140 via the controller 110 and the display unit 140 displays physical color values corresponding to the converted digital color values.

When the controller 110 converts the input digital color values to the converted digital color values, the controller 110 may be configured to convert the input digital color values by adjusting at least one of luminance values and chromaticity values of the input digital color values by an equal amount based on at least one of the determined viewing angle 150 and position of the head of the user 130. The input digital color values may be different input digital color values, e.g., input digital color values having different R, G, B values for RGB input digital color values, or may be identical. Accordingly, a luminance perceived by the user 130 of physical color values associated with the converted digital color values displayed by the display unit 140 may be increased or decreased. By adjusting the chromaticity values, an adjustment of grey levels displayed by the display unit 140 can be performed. Assuming that the grey levels displayed by the display unit 140 are color neutral, adjusting the chromaticity values by the equal amount would result in a respective luminance increase or decrease perceived by the user 130. However, if the grey levels displayed by the display unit 140 have, e.g., a small green tint, a red and a blue portion of the input digital color value would be adjusted, thereby eliminating the small green tint. Optionally, the chromaticity values could in a further step be adjusted by the equal amount.

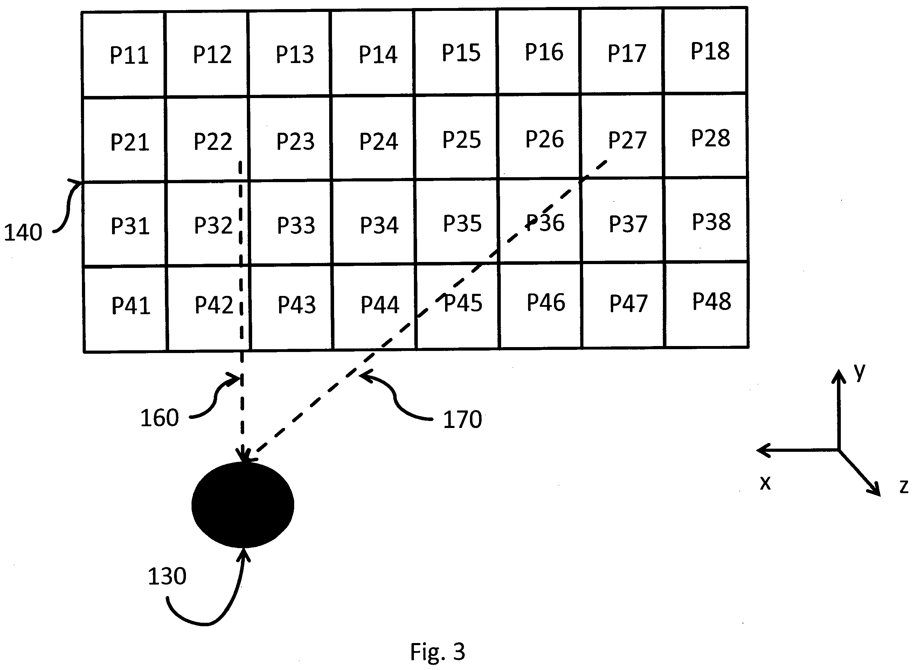

The conversion of the input digital color values to the converted digital color values becomes more apparent with regard to Fig. 3. In Fig. 3, the display unit 140 is divided into different logical or physical display sections P11 to P48 (e.g., pixel groups), each associated with a dedicated position on the display unit 140. As illustrated in Figs. 1 and 3, the user 130 is positioned more to the left side than to the right side of the display unit 140. The user 130 may for example view the display section P27, wherein the display section P22 is the display section of all display sections of the display unit 140 having the closest distance with respect to the head of the user 130. The display section P22 may be identified by the detecting unit 120 by geometrical calculations, for example by determining the normal vector 160 from the head of the user 130 with respect to the display unit 140. Compared to display section P22, display section P27 has a greater distance to the head of the user 130 and is associated with a different viewing angle 150.

If, for example, the display unit 140 displays in each display section P11 to P48 a physical color value corresponding to the same input digital color value (e.g., a monochromatic image), the user 130 perceives a difference in at least one of a luminance and a chromaticity for the display section P22 and the display section P27 due to the different viewing angles. In particular, the display section P27 may appear to have a lower luminance or lower chromaticity compared to the display section P22. This effect is based on technical constraints and the fact that the human eye perceives physical colors from different viewing angles or positions differently, despite the fact that the sources of the physical color may emit physical colors having identical nominal luminances.

Accordingly, in order to provide an image via the display unit 140 having a homogenous luminance perceived by the user 130, the detecting unit 120 detects at least one of the viewing angle 150 and the position of the head of the user 130 with respect to each of the display sections P11 to P48 and the controller 110 properly adjusts the input digital color values for at least one of the display sections P11 to P48 (e.g., Fig. 2).

Based on the determined viewing angle 150, the controller 110 converts the input digital color values associated with the display section P27 such that a physical color value associated with the converted digital color value of the display section P27 equals the physical color value associated with the input digital color value of the display section P22. As a result, a luminance perceived by the user 130 in regard of the physical colors from the display section P22 and P27 becomes homogenous. Of course, similar conversion operations may be performed in regard of the remaining display sections shown in Fig. 3 and/or in regard of different input digital color values for different display sections.

Besides adjusting a luminance value of the input digital color values, the controller 110 can adjust in addition or alternatively at least one of a hue value and/or a chromaticity value of the input digital color values.

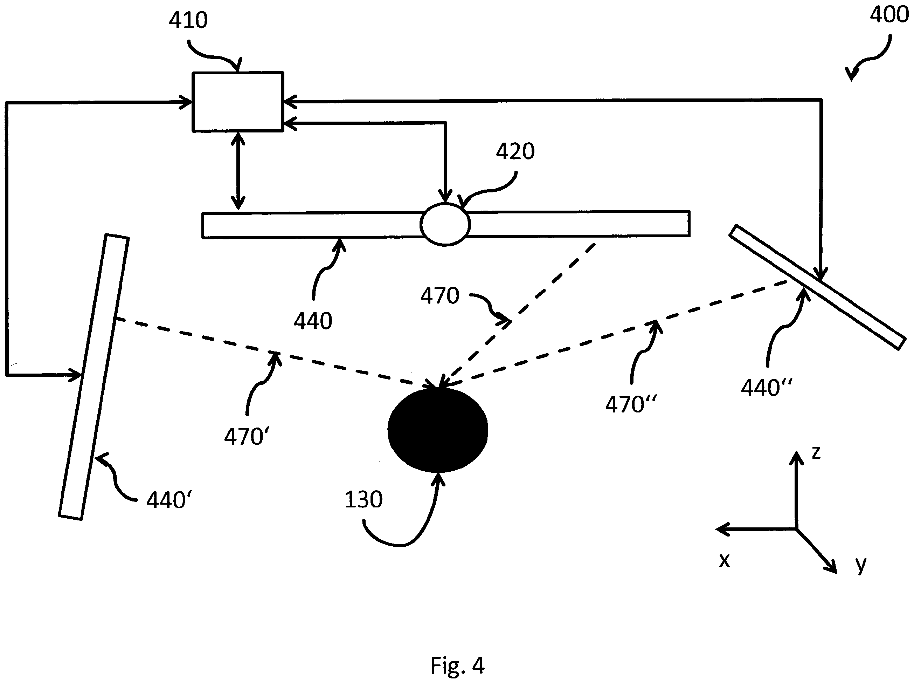

In the scenario illustrated in Fig. 4, the user 130 is surrounded by a plurality of a display units 440, 440', 440", in particular, he/she is surrounded by a first display unit 440, a second display unit 440' and a third display unit 440". Such a situation may, for example, occur in a motor vehicle. In the embodiment illustrated in Fig. 4, a detecting unit 420 in spatial relation to display unit 440 is configured to determine at least one of a viewing direction 470, 470', 470" and a position of the head of the user 130 with respect to each of the three display units 440, 440', 440". Alternatively, a detecting unit may be provided for each of the three display units 440, 440', 440".

As illustrated in Fig. 4, there exist (at least) three different viewing directions 470, 470' and 470" of the head of the user 130 with respect to the first display unit 440, the second display unit 440' and the third display unit 440". The detecting unit 420 determines a viewing angle in the xz-plane. It may, however, also be configured to determine in addition or alternatively a viewing angle in a xyz-space as well as a viewing direction in the yz-plane. Based on the determined viewing directions 470, 470', 470", the detecting unit 420 can be configured to determine respective viewing angles associated with the viewing directions 470, 470', 470" by simple geometric calculations as was already outlined above. Thus, viewing directions are technically equivalent to viewing angles.

A controller 410 receives input digital color values associated with the first, the second and the third display units 440, 440' ,440", which are converted and displayed by each of the three display units 440, 440' and 440", or may receive digital color value inputs for three images for the three display units 440, 440' and 440", respectively. Based on the information of at least one of the determined viewing directions 470, 470', 470" and the positions of the head of the user 130 with respect to the display units 440, 440', 440", the controller 410 is configured to convert the input digital color values to converted digital color values.

If, for example, the same image is to be displayed on each of the three display units 440, 440', 440", the controller 410 converts the input digital color values such that at least one of a luminance and chromaticity perceived by the user of physical color values associated with the input color values provided to each of the display units 440, 440', 440" is identical for the user 130.

Similar to Fig 1, in Fig. 4, only one viewing direction 470, 470', 470" and/or position of the head of the user 130 with respect to the display units 440, 440', 440" is determined. Thus, the detecting unit 420 can be configured to determine the viewing direction 470, 470', 470" and/or position of the head of the user 130 with respect to a center of the display units 440, 440', 440"or any other position of the display units 440, 440', 440" (e.g., as a normal vector). The controller 410 is configured to convert all input digital color values for the display unit 440 based on at least one of the viewing direction 470 and position of the head of the user 130 with respect to the display unit 440. The same applies for the conversion of the input digital color values for the display units 440', 440" based on at least one of the viewing direction 470', 470" and position of the head of the user 130 with respect to the display unit 440', 440", respectively.

With regard to Figs. 3 and 4, each of the display units 440, 440' and 440" may be divided into a plurality of display sections and the controller 410 may be configured to convert the input digital color values based on at least one of determined viewing angles and positions of the head of the user 130 with respect to each of the display sections of the display units 440, 440' and 440" as explained above.

Alternatively or additionally, the controller 410 may be configured to determine whether one or more of the display units 440, 440' and 440" are turned off. If one of the display units 440, 440' and 440" is turned off, the controller 410 may determine, based on at least one of the detected viewing directions 470, 470', 470" and the detected positions of the head of the user 130, to exclude input digital color values associated with the switched off display unit 440, 440', 440" from being converted. Alternatively, the controller 410 may be configured to switch on the switched off display unit 440, 440', 440" and to convert the input digital color values based on at least one of the determined viewing directions 470, 470', 470" and the determined positions of the head of the user 130 with respect to the display unit 440, 440', 440".

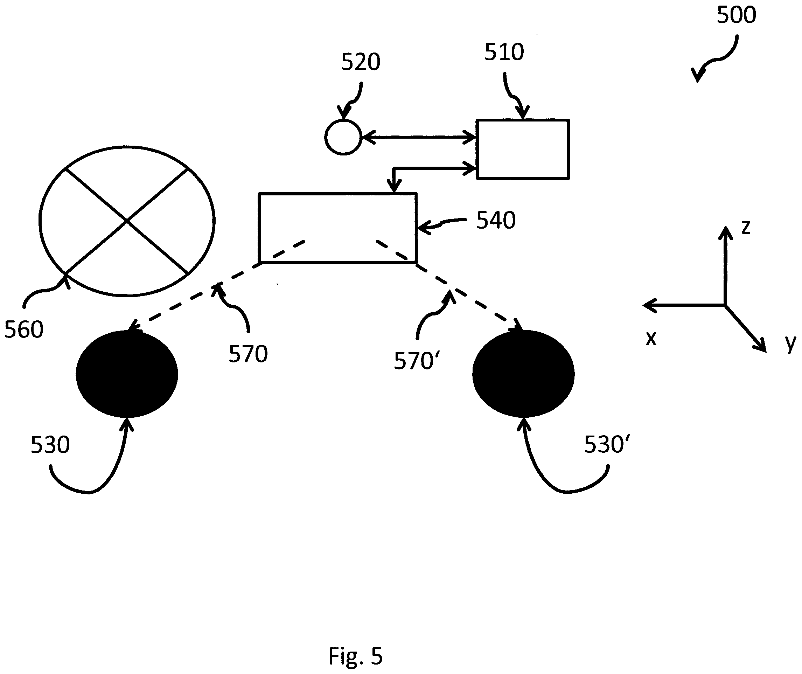

Fig. 5 schematically illustrates another viewing scenario in a motor vehicle. A driver 530 and a passenger 530' are situated inside the motor vehicle and a display unit 540 can be viewed by each of the driver 530 and the passenger 530'. The display unit 540 may for example belong to a car infotainment system. The driver 530 is situated behind a steering wheel 560. In the motor vehicle, a detecting unit 520 is arranged and configured to determine at least one of a viewing direction 570, 570' and a position of a head of the driver 530 and a head of the passenger 530' with respect to the display unit 540. A controller 510 is provided in the form of a board computer of the motor vehicle, or may be a standalone unit, and is configured to receive from the detecting unit 520 information relating to at least one of the detected viewing directions 570, 570' and the detected positions of the driver 530 and the passenger 530'.

Physical color values output by the display unit 540 are controlled by the controller 510 via converting input digital color values to converted digital color values, wherein the displayed physical color values are associated with the converted digital color values. The input digital color values may be received via an air interface, a network or for example the board computer of the motor vehicle.

The detecting unit 520 is configured to determine whether the driver 530 is currently viewing the display unit 540 or not. Assuming a situation in which the driver 530 is currently driving, the driver 530 may only view the display unit 540 to have a short look at the visual navigation instructions.

Therefore, the controller 510 is configured to prioritize the conversion of the input digital color values based on at least one of the detected viewing directions 570, 570' and detected positions of the head of the driver 530 and the passenger 530' and based on the information whether the driver 530 is currently viewing the display unit 540 or not. If the driver 530 is currently viewing the display unit 540, the controller 510 is configured to convert the input digital color values based on at least one of the detected viewing direction 570 and the detected position of the driver 530. Thereby, it is ensured that the driver 530, when viewing the display unit 540, is provided with an excellent image quality. However, as long as the driver 530 is not viewing the display unit 540 and is currently concentrated on viewing the road ahead, it may be reasonable to convert the input digital color values based on at least one of the determined viewing direction 570' and the determined position of the passenger 530'. Accordingly, since it is not necessary to adapt the display 540 to the driver 530 as long as the driver is not viewing the display unit 540, the provided information via the display unit 540 may be optimized for the passenger 530' in that the passenger 530' perceives a well-adjusted image.

Alternatively, when the driver 530 is currently viewing the display unit 540, the controller 510 is configured to convert the input digital color values based on at least one of the determined viewing direction 570 and the position of the driver 530 with respect to the display unit 540. When the driver 530 is currently not viewing the display unit 540, the controller 510 can be configured to convert the input digital color values based on at least one of an average calculated viewing direction and an average calculated position or to perform no conversion at all. The average viewing direction and the average position are based on the determined viewing directions 570, 570' and the determined positions of the driver 530 and the passenger 530' with respect to the display unit 540. Accordingly, the detecting unit 520 may determine, based on the detected viewing directions 570, 570', an average viewing angle. The detecting unit 520 may in addition or alternatively be configured to determine the average position based on the positions of the driver 530 and the passenger 530' in a horizontal plane, e.g. in Fig. 5 in the xy-plane. Thus, the displayed physical color values have at least one of luminance values and chromaticity values that are perceived substantially identical by the driver 530 and the passenger 530. The driver 530 and the passenger 530 may thus still properly perceive the physical color values displayed by the display unit 540 in a peripheral field of view.

Alternatively or additionally, the display unit 540 can display two different windows on the display unit 540. For example, a first window displayed on the display unit 540 may display an electronic horizon of the road ahead and a second window displayed on the display unit 540 may display textual information about the road ahead, including information about construction sites, speed limitations, traffic jams or the like. The information of the road ahead provided by the first window can be regarded as visual information, which is comprehended in a short time period, while the textual information needs to be read and thus would require a longer time period to comprehend. Accordingly, assuming the case that the driver 530 is currently driving the motor vehicle, the controller 510 can be configured to convert input digital color values associated with the first window based on at least one of the determined viewing direction 570 and the determined position of the head of the driver 530 and to convert the input digital color values associated with the second window based on at least one of the determined viewing direction 570' and the determined position of the head of the passenger 530'. Accordingly, both the driver 530 and the passenger 530' are provided with an image of the respective windows in an accurate manner.

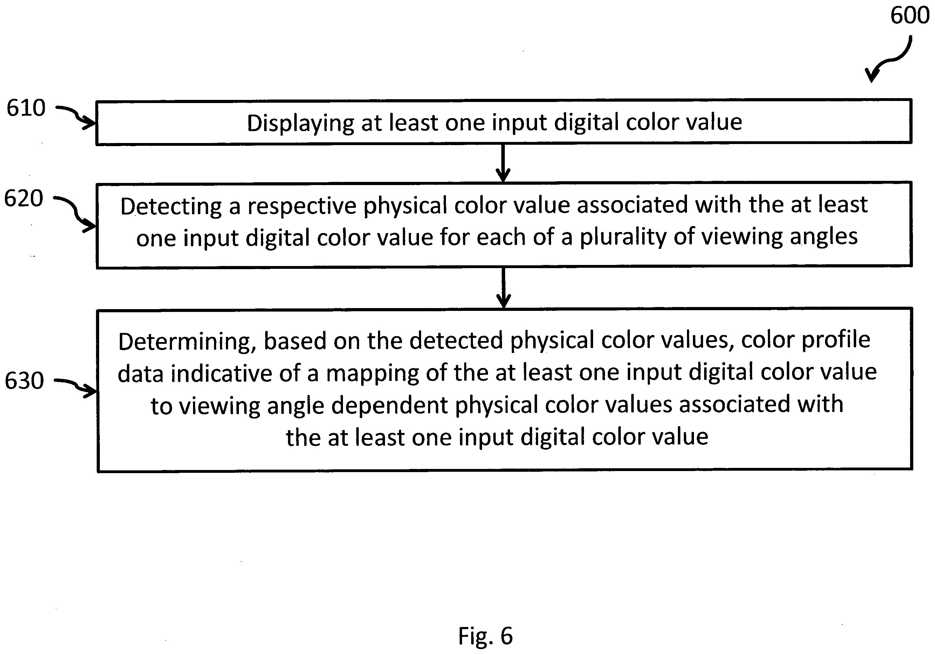

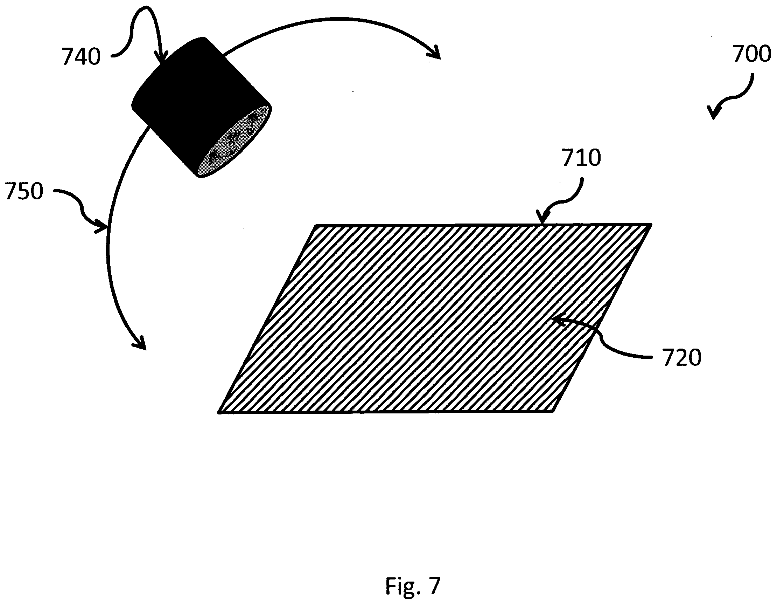

Fig. 6 schematically illustrates an embodiment of a method 600 for determining color profile data and will be explained in combination with Fig. 7, which schematically illustrates a possibility of implementing the method 600 of Fig. 6.

As illustrated in Fig. 7, and in a first step 610 in Fig. 6, a display unit 710 displays for example on its display 720 first physical color values associated with a first input digital color value. A physical color detecting unit 740, e.g., a colorimeter, is configured to detect respective physical color values associated with the input digital color value of the display section 720. The physical color detecting unit 740 is configured to move with respect to the display unit 710 such that the physical color values associated with the input digital color value are detected at different viewing angles as exemplarily illustrated by the arrow 750. As an option, in order to accelerate the procedure of detecting a plurality of physical color values associated with a plurality of input digital color values at different viewing angles, a predetermined number of input digital color values can be displayed simultaneously on different sections of the display 720 of the display unit 710. In order to detect a plurality of physical color values associated with the predetermined number of input digital color values at different viewing angles, one color detecting unit configured to detect the plurality of physical color values or a plurality of color detecting units configured to detect the plurality of physical color values may be used. The plurality of color detecting units may be equal to the predetermined number of input digital color values displayed simultaneously.

As was already explained above, the physical color values vary dependent on the viewing angle. Thus, the physical color detecting unit 740 detects a plurality of physical color values for the identical input digital color values displayed by the display sections 720, 730 in step 620.

In step 630, based on the detected physical color values, color profile data are determined, which are indicative of a mapping of the at least one input digital color value to viewing angle dependent physical color values. The color profile data may comprise at least one of a conversion matrix, a file, a lookup table (LUT), and an ICC profile. The color profile data is indicative of a viewing angle dependent color gamut of the input digital color values. Thus, a physical color value of an input digital color value may vary for each of a plurality of viewing angles, and a difference in at least one of luminance values and chromaticity values can be determined for the input digital color values. Accordingly, the color profile data are also indicative of identical physical color values for different input digital color values.

Based on the determined color profile data, conversion information can be determined. The conversion information is indicative of a mapping of the input digital color values to converted digital color values based on a viewing angle. As already outlined above, the color profile data provides information about a relationship between the physical color values and viewing angles for a plurality of input digital color values. Thus, the color profile data can represent a color gamut dependent on a viewing angle for each of a plurality of input digital color values. Accordingly, physical color values of different input digital color values may be identical for a determined viewing angle.

With exemplarily regard to Fig. 3, one input digital color value is provided for the display sections P22 and P27. The controller 110 is configured based on the color profile data obtained from the procedure illustrated in Figs. 6 and 7 to convert the particular input digital color associated with the display section P22 by, as an example, not adjusting the input digital color value and to convert the particular input digital color value associated with the display section P27 by adjusting the particular input digital color value such that at least one of a perceived luminance or chromaticity of physical color values associated with the display sections P22, P27 is identical. Thus, the particular input digital color value associated with the display section P22 is not changed, but the particular digital color value associated with the display section P27 is changed to a converted digital color value. The converted digital color value associated with the display section P27 can be a digital color value, which has an identical physical color value as the particular input digital color value associated with the display section P22 for at least one of the determined viewing angles and positions of the head of the user 130 with respect to the display sections P22, P27.

Therefore, the controller 110 is configured to access the color profile data. As already explained above with regard to Figs. 6 and 7, the color profile data is indicative of a mapping of input digital color values and an associated viewing angle dependent physical color value. Therefore, the controller 110 can identify the physical color value associated with the particular input digital color value for the display section P22 and the physical color value associated with the particular input digital color value for the display section P27 via the color profile data based on at least one of the determined viewing angles and positions of the head of the user 130 with respect to the display sections P22, P27. Thus, the controller 110 can determine a difference in at least one of a chromaticity and a luminance of the physical color values associated with the display sections P22, P27 due to at least one of the different viewing angles and positions of the head of the user 130 with respect to the display sections P22, P27. Then, the controller 110 may identify an input digital color value associated with an physical color value having at least one of a chromaticity and luminance value identical to at least one of a chromaticity value and luminance value of the physical color value of the particular input digital color value associated with the display section P22, but for at least one of the determined viewing angle and position of the head of the user with respect to the display section P27.

As an option, the searching and matching process as described above can also be performed by accessing the conversion information via the controller 110. The conversion information can be provided in the form of, e.g., a mapping matrix, wherein the input parameters are the particular input digital color values and at least one of the viewing angle and position of the head of the user 130 with respect to the display section P22 and at least one of the viewing angle and position of the head of the user 130 with respect to the display section P27, as will be explained in the following. Thus, the mapping of the color profile data can adjust the input digital color value for each of the viewing angles such that an observed physical color appears identical for identical input digital color values at different display sections P22, P27, or the observed physical colors correspond to a "true" coloring for different input digital color values at different display sections P22, P27.

An example of a mapping matrix used as conversion information with an initial condition of a viewing angle of a =0° may have the form of:

$$
\begin{pmatrix} R_x(\alpha) \\ R_y(\alpha) \\ R_Y(\alpha) \end{pmatrix} = \begin{pmatrix} \varphi_{11}(\alpha) & \cdots & \varphi_{13}(\alpha) \\ \vdots & \ddots & \vdots \\ \varphi_{31}(\alpha) & \cdots & \varphi_{33}(\alpha) \end{pmatrix} * \begin{pmatrix} R_x(0) \\ R_y(0) \\ R_Y(0) \end{pmatrix}
$$

wherein $\varphi_{xy}(\alpha)$ is a numerical value dependent on the angle $\alpha$, $R_{xy\gamma}(0)$ is a (x, y, Y)-value corresponding to a viewing angle of 0° provided in the format of the CIE color space (CIE-xyY), and $R_{xy\gamma}(\alpha)$ is a (x, y, Y)-value corresponding to a viewing angle different than 0°. The controller 110, 410, 510 receives at least one input digital color value, and determines physical color values for the viewing angle of $\alpha$ =0° by accessing, e.g., an ICC-profile of an associated display unit.

We assume the situation that the user 130 is situated in front of the display unit 140 as illustrated in Fig. 3, wherein the display section P22 is observed by the user 130 at a viewing angle of 0° and a display section P23 at a viewing angle of 10°. Both display sections P22, P23 have identical input digital color values. However, due to the different viewing angles with respect to the user 130, the display sections P22, P23 would have different physical color values perceived by the user 130. In order to convert the input digital color value associated with P23, the controller 110 is configured to access the matrix as shown above.

In a first step, the above identified matrix can be split into three different equations, resulting in prefactors for $\varphi_{xy}(\alpha)$ for a viewing angle $\alpha$=0:

$$
R_x(0) = \varphi_{11}(0) * R_x(0) + \varphi_{12}(0) * R_y(0) + \varphi_{13}(0) * R_Y(0)
$$

$$
R_y(0) = \varphi_{21}(0) * R_x(0) + \varphi_{22}(0) * R_y(0) + \varphi_{23}(0) * R_Y(0)
$$

$$
R_Y(0) = \varphi_{31}(0) * R_x(0) + \varphi_{32}(0) * R_y(0) + \varphi_{33}(0) * R_Y(0)
$$

$$
\rightarrow \varphi_{11}(0) = 1 \ and \ \varphi_{12}(0) = \varphi_{13}(0) = 0
$$

$$
\rightarrow \varphi_{22}(0) = 1 \ and \ \varphi_{21}(0) = \varphi_{23}(0) = 0
$$

$$
\rightarrow \varphi_{33}(0) = 1 \ and \ \varphi_{31}(0) = \varphi_{32}(0) = 0
$$

Based on the above equations, the matrix may be formulated for viewing angles different than 0° as:

$$
\begin{pmatrix} R_x(\alpha) \\ R_y(\alpha) \\ R_Y(\alpha) \end{pmatrix} = \begin{pmatrix} \varphi_{11}(\alpha) & 0 & 0 \\ 0 & \varphi_{22}(\alpha) & 0 \\ 0 & 0 & \varphi_{33}(\alpha) \end{pmatrix} * \begin{pmatrix} R_x(0) \\ R_y(0) \\ R_Y(0) \end{pmatrix}
$$

Based on an exemplary estimation, $\varphi_{11}(\alpha)$, $\varphi_{22}(\alpha)$ and $\varphi_{33}(\alpha)$ may be formulated as:

$$\varphi_{11}(\alpha) = \varphi_{22}(\alpha) = \varphi_{33}(\alpha) = \cos(\alpha)^2$$

Now, the controller 110, 410, 510 can determine $R_{xy\gamma}(\alpha)$ for each viewing angle, which may result in a look-up-table, LUT, as shown below, wherein the xyY-values for the viewing angle $\alpha=0$ are known from the ICC-profile. Alternatively, the LUT or a similar data structure may be incorporated by the conversion information (and thus has not to be accessed separately by the controller 110).

The $R_{xy\gamma}(\alpha)$ values for a red RGB-input digital color value [255, 0,0] as shown below for the exemplary viewing angle of 10° are determined by the controller 110, 410, 510 by accessing the ICC-color profile. Then, the controller 110, 410, 510 can solve the following equations by using the determined $R_{xy\gamma}(0)$ values for the red RGB-input digital color value of the ICC-profile as follows:

$$\begin{pmatrix} R_x(10) \\ R_y(10) \\ R_Y(10) \end{pmatrix} = \begin{pmatrix} \cos(10)^2 & 0 & 0 \\ 0 & \cos(10)^2 & 0 \\ 0 & 0 & \cos(10)^2 \end{pmatrix} * \begin{pmatrix} 0.681 \\ 0.308 \\ 71.15 \end{pmatrix}$$

This calculation can be performed in a similar manner for different viewing angles as exemplarily shown below.

| Angle [°] | Red RGB-input digital color value [255, 0, 0] is mapped to [x, y, Y] | Green RGB-input digital color value [0, 255, 0] is mapped to [x, y, Y] | Blue RGB-input digital color value [0, 0, 255] is mapped to [x, y, Y] |
|---|---|---|---|
| 0 (ICC-profile) | 0.681, 0.308, 71.150 | 0.200, 0.704, 178.200 | 0.147, 0.062, 21.840 |
| 10 | 0.661, 0.299, 69.005 | 0.194, 0.683, 172.827 | 0.147, 0.062, 21.181 |
| 20 | 0.601, 0.272, 62.825 | 0.177, 0.622, 157.355 | 0.130, 0.055, 19.285 |

Then, the controller 110, 410, 510 may access again the ICC-profile in order to determine an associated converted digital color value for the determined physical color values of the table as shown above. The controller 110, 410, 510 may further determine $R_{xy\gamma}(\alpha)$-values for further viewing angles and also $R_{xy\gamma}(\alpha)$ for a green RGB-input digital color value and blue RGB-input digital color value portion. The above example can be performed for each of a plurality of RGB-input digital color values [0-255, 0-255, 0-255] and also for other input digital color values, like a hue-saturation-value, HSV, digital color value input, a hue-saturation-lightness (luminance), HSL, digital color value input, or a luminance-chromaticity, LUV, digital color value input.

Based on the above exemplary LUT, also a general conversion rule between two viewing angles may be formulated.

The color profile data may be stored in a memory of a display device in the form of a matrix and/or in the form of a lookup table (LUT). Further, the color profile data may be stored in a database, which is, e.g., accessible via the Internet.

**Claims**

**1.** A system (100, 400, 500) for color adjustment, comprising:

EP 3 316 120 A1

a detecting unit (120, 420, 520) configured to determine at least one of a viewing angle (150) and a position of a head of a user (130, 530, 530') with respect to a display unit (140, 440, 440', 440'', 540), and
a controller (110, 410, 510) configured to receive input digital color values, to convert the input digital color values to converted digital color values based on at least one of the determined viewing angle and the determined position of the head of the user and to output the converted digital color values to the display unit.

2.  The system according to claim 1,
    wherein the controller is configured to convert the input digital color values by adjusting at least one of luminance values and chromaticity values of the input digital color values.

3.  The system according to claim 1 or 2,
    wherein the controller is configured to convert the input digital color values by adjusting at least one of chromaticity values and luminance values of a first input digital color value associated with a first position on the display unit (P22) and of a second input digital color value associated with a second position (P27) on the display unit,
    wherein the first position is closer to the determined position of the head of the user than the second position, and
    wherein at least one of a chromaticity value and a luminance value of the second input digital color value is adjusted by a different value than at least one of a chromaticity value and a luminance value of the first input digital color value.

4.  The system according to claim 3,
    wherein the controller is configured to convert the first and second input digital color values such that at least one of a chromaticity and a luminance perceived by the user of physical color values associated with the converted digital color values displayed by the display unit is substantially the same for the first and the second position on the display unit, when the first and second input digital color values have an identical luminance and/or an identical chromaticity value.

5.  The system according to one of the preceding claims,
    wherein the controller is configured to convert the input digital color values such that at least one of a chromaticity and a luminance perceived by the user of physical color values associated with the converted digital color values displayed by the display unit is substantially homogeneous over the entire display unit, when the input digital color values associated with all positions on the display unit are identical.

6.  The system according to one of the preceding claims,
    wherein the detecting unit is configured to evaluate at least one of a viewing angle and a position of the head of the user with respect to each of a plurality of display units to determine the particular display unit currently viewed by the user, and
    wherein the controller is configured to convert the input digital color values based on at least one of the viewing angle and position of the head of the user relative to the particular display unit, and to output the converted digital color values to the particular display unit.

7.  The system according to one of the preceding claims,
    wherein the detecting unit is configured to determine at least one of the viewing angle and the head of the user by face recognition.

8.  The system according to one of the preceding claims,
    wherein the controller is configured to convert the input digital color values by adjusting at least one of a luminance value, a hue value and/or a chromaticity value of the input digital color values.

9.  The system according to one of the preceding claims,
    wherein the system is configured to be used in a motor vehicle, and
    wherein the detecting unit is configured to determine a driver of the motor vehicle as the user.

10. The system according to claim 9,
    wherein the detecting unit is configured to determine a passenger of the motor vehicle,
    wherein the detecting unit is configured to determine at least one of a viewing angle and a position of the head of the driver and at least one of a viewing angle and a position of the head of the passenger with respect to the display unit,
    wherein the detecting unit is configured to detect whether the driver is currently viewing the display unit,
    wherein the controller is configured to determine the driver as the user when the driver is currently viewing the display unit and to determine the passenger as the user when the driver is currently not viewing the display unit.

**11.** A motor vehicle comprising the system according to any one of claims 1 to 10.

**12.** A method (200) for color adjustment, comprising:

receiving (210) input digital color values;
determining (220) at least one of a viewing angle and a position of a head of a user with respect to a display unit;
converting (230) the input digital color values to converted digital color values based on at least one of the determined viewing angle and the determined position of the head of the user with respect to the display unit; and
outputting (240) the converted digital color values to the display unit.

**13.** A method (600) for determining color profile data, the method comprising the steps of:

displaying (610) at least one input digital color value via a display unit (710);
detecting (620) a respective physical color value associated with the at least one input digital color value for each of a plurality of viewing angles (750); and
determining (630), based on the detected physical color values, color profile data indicative of a mapping of the at least one input digital color value to viewing angle dependent physical color values associated with the at least one input digital color value.

**14.** The method according to claim 13, further comprising the step of:

determining conversion information based on the viewing angle dependent physical color values associated with the at least one input digital color value, wherein the conversion information is indicative of a mapping of input digital color values to converted digital color values based on a viewing angle.

**15.** A computer program product comprising program code portions for performing the steps of any of claims 12 to 14 when the computer program product is executed by one or more processors.

**16.** A data structure representing conversion information, wherein the data structure is configured to be accessed by a color management device (100, 400, 500) configured to receive input digital color values and to output converted digital color values to a display unit (140, 440, 440', 440", 540),
wherein the conversion information is indicative of a conversion of input digital color values to the converted digital color values based on at least one of a viewing angle (150) and a position of a head of a user (130, 530, 530') with respect to the display unit displaying the converted digital color values.

**Amended claims in accordance with Rule 137(2) EPC.**

**1.** A system (400) for color adjustment, comprising:

a detecting unit (420) configured to determine at least one of a viewing angle (150) and a position of a head of a user (130) with respect to each of a plurality of display units (440, 440', 440"), and
a controller (410) configured to receive input digital color values, to convert the input digital color values to converted digital color values based on at least one of the determined viewing angle and the determined position of the head of the user and to output the converted digital color values to the respective display unit,
wherein the controller is configured to, if the same image is to be displayed on each of the plurality of display units, convert the input digital color values such that at least one of a luminance and a chromaticity perceived by the user (130) of physical color values associated with the input color values provided to each of the display units (440, 440', 440") is identical for the user (130).

**2.** The system according to claim 1,
wherein the controller is configured to convert the input digital color values by adjusting at least one of luminance values and chromaticity values of the input digital color values.

**3.** The system according to claim 1 or 2,
wherein the controller is configured to convert the input digital color values by adjusting at least one of chromaticity values and luminance values of a first input digital color value associated with a first position on a display unit (P22) of the plurality of display units and of a second input digital color value associated with a second position (P27) on the display unit,
wherein the first position is closer to the determined position of the head of the user than the second position, and
wherein at least one of a chromaticity value and a luminance value of the second input digital color value is adjusted
by a different value than at least one of a chromaticity value and a luminance value of the first input digital color value.

4. The system according to claim 3,
wherein the controller is configured to convert the first and second input digital color values such that at least one
of a chromaticity and a luminance perceived by the user of physical color values associated with the converted
digital color values displayed by the display unit is substantially the same for the first and the second position on
the display unit, when the first and second input digital color values have an identical luminance and/or an identical
chromaticity value.

5. The system according to one of the preceding claims,
wherein the controller is configured to convert the input digital color values such that at least one of a chromaticity
and a luminance perceived by the user of physical color values associated with the converted digital color values
displayed by a display unit of the plurality of display units is substantially homogeneous over the entire display unit,
when the input digital color values associated with all positions on the display unit are identical.

6. The system according to one of the preceding claims,
wherein the detecting unit is configured to evaluate at least one of a viewing angle and a position of the head of the
user with respect to each of the plurality of display units to determine the particular display unit currently viewed by
the user.

7. The system according to one of the preceding claims,
wherein the detecting unit is configured to determine at least one of the viewing angle and the head of the user by
face recognition.

8. The system according to one of the preceding claims,
wherein the controller is configured to convert the input digital color values by adjusting at least one of a luminance
value, a hue value and/or a chromaticity value of the input digital color values.

9. The system according to one of the preceding claims,
wherein the system is configured to be used in a motor vehicle, and
wherein the detecting unit is configured to determine a driver of the motor vehicle as the user.

10. The system according to claim 9,
wherein the detecting unit is configured to determine a passenger of the motor vehicle,
wherein the detecting unit is configured to determine at least one of a viewing angle and a position of the head of
the driver and at least one of a viewing angle and a position of the head of the passenger with respect to a display
unit of the plurality of display units,
wherein the detecting unit is configured to detect whether the driver is currently viewing the display unit,
wherein the controller is configured to determine the driver as the user when the driver is currently viewing the
display unit and to determine the passenger as the user when the driver is currently not viewing the display unit.

11. A motor vehicle comprising the system according to any one of claims 1 to 10.

12. A method (200) for color adjustment, comprising:

receiving (210) input digital color values;
determining (220) at least one of a viewing angle and a position of a head of a user with respect to each of a
plurality of display units;
converting (230) the input digital color values to converted digital color values based on at least one of the
determined viewing angle and the determined position of the head of the user with respect to the respective
display unit;
convert, if the same image is to be displayed on each of the plurality of display units, the input digital color
values such that at least one of a luminance and a chromaticity perceived by the user of physical color values
associated with the input color values provided to each of the display units is identical for the user; and
outputting (240) the converted digital color values to the display unit.

**13.** A computer program product comprising program code portions for performing the steps of claim 12 when the computer program product is executed by one or more processors.

Fig. 1

EP 3 316 120 A1

**200**

| 210 | Receiving input digital color values |
|---|---|

| 220 | Determining at least one of a viewing angle and a position of a head of a user with respect to a display unit |
|---|---|

| 230 | Converting the input digital color values to converted digital color values based on at least one of the determined viewing angle and the determined position of the head of the user with respect to the display unit |
|---|---|

| 240 | Outputting the converted digital color values to the display unit |
|---|---|

Fig. 2

| P11 | P12 | P13 | P14 | P15 | P16 | P17 | P18 |
| P21 | P22 | P23 | P24 | P25 | P26 | P27 | P28 |
| P31 | P32 | P33 | P34 | P35 | P36 | P37 | P38 |
| P41 | P42 | P43 | P44 | P45 | P46 | P47 | P48 |

140

160

170

130

y

x

z

EP 3 316 120 A1

18

Fig. 3

Fig. 4

Fig. 5

EP 3 316 120 A1

610 — Displaying at least one input digital color value

620 — Detecting a respective physical color value associated with the at least one input digital color value for each of a plurality of viewing angles

630 — Determining, based on the detected physical color values, color profile data indicative of a mapping of the at least one input digital color value to viewing angle dependent physical color values associated with the at least one input digital color value

Fig. 6

EP 3 316 120 A1

Fig. 7

Europäisches
Patentamt

European
Patent Office

Office européen
des brevets

## EUROPEAN SEARCH REPORT

Application Number

EP 16 00 2287

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/117186 A1 (LI BAOXIN [US] ET AL) 2 June 2005 (2005-06-02) * paragraph [0013] - paragraph [0014] * * paragraph [0019] - paragraph [0024] * * paragraph [0022] - paragraph [0025] * | 1-16 | INV. G06F3/147 G09G5/02 H04N9/64 |
| X | US 2015/179117 A1 (HONG SEOK-HA [KR] ET AL) 25 June 2015 (2015-06-25) * figure 8 * * paragraph [0077] - paragraph [0078] * | 1 | |
| X | GB 2 467 898 A (SHARP KK [JP]) 18 August 2010 (2010-08-18) * figures 7,8,9 * | 1 | |
| A | US 2012/327133 A1 (EGUCHI KATSUYA [JP]) 27 December 2012 (2012-12-27) * figures 7,8 * | 1-16 | |

TECHNICAL FIELDS
SEARCHED (IPC)

G06F
G09G
H04N

The present search report has been drawn up for all claims

| Place of search | Date of completion of the search | Examiner |
|---|---|---|
| The Hague | 16 March 2017 | Le Chapelain, B |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 00 2287

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2017

| Patent document cited in search report | | | Publication date | Patent family member(s) | | | Publication date |
|---|---|---|---|---|---|---|---|
| US 2005117186 | A1 | | 02-06-2005 | US | 2005117186 | A1 | 02-06-2005 |
| | | | | WO | 2005052673 | A2 | 09-06-2005 |
| US 2015179117 | A1 | | 25-06-2015 | KR | 20150072254 | A | 29-06-2015 |
| | | | | US | 2015179117 | A1 | 25-06-2015 |
| GB 2467898 | A | | 18-08-2010 | NONE | | | |
| US 2012327133 | A1 | | 27-12-2012 | CN | 102855855 | A | 02-01-2013 |
| | | | | JP | 5772289 | B2 | 02-09-2015 |
| | | | | JP | 2013007912 | A | 10-01-2013 |
| | | | | US | 2012327133 | A1 | 27-12-2012 |

EPO FORM P0459

For more details about this annex : see Official Journal of the European Patent Office, No. 12/82

**EP 3 316 120 A1**

## REFERENCES CITED IN THE DESCRIPTION

**Patent documents cited in the description**

- DE 102012200525 A1